# EUROPÄISCHE PATENTSCHRIFT

(11) **EP 4 332 180 B1**
(45) Veröffentlichungstag und Bekanntmachung des Hinweises auf die Patenterteilung: **24.07.2024**
(21) Anmeldenummer: 22193253.6
(22) Anmeldetag: 31.08.2022
(51) Int. Cl.: C09D 11/102, C09D 11/106, C09D 11/14, C09D 11/322, C09D 11/38, C09D 17/00, D06P 5/00, D06P 1/44, D06P 1/48, D06P 1/52, D06P 1/62

(54) **TINTE FÜR DAS BEDRUCKEN UND FÄRBEN VON KUNSTFASERN**
INK FOR PRINTING AND DYEING SYNTHETIC FIBRES
ENCRE POUR L'IMPRESSION ET LA TEINTURE DES FIBRES SYNTHÉTIQUES

(43) Veröffentlichungstag der Anmeldung: 06.03.2024
(73) Patentinhaber: prometho GmbH, 56579 Bonefeld (DE)
(72) Erfinder: Hoffmann, Ruth, 56579 Rengsdorf (DE); Hoffmann, Jens-Christoph, 56579 Rengsdorf (DE)
(74) Vertreter: Michalski Hüttermann & Partner Patentanwälte mbB

(56) Entgegenhaltungen:
- JP-A- 2003 048 367
- US-A1- 2004 009 294
- US-A1- 2017 137 648

## Beschreibung

Die Erfindung betrifft eine Pigmentdispersion, ein Verfahren zur Herstellung der Pigmentdispersion, Tinte zum Bedrucken und Färben von unpolaren Substraten, ein Verfahren zum Bedrucken und Färben von unpolaren Substraten sowie die Verwendung der Pigmentdispersion zum Bedrucken und Färben von unpolaren Substraten sowie ein Textil, gefärbt oder bedruckt mit dieser Tinte.

Farbpigmente sind farbgebende Substanzen, die im Gegensatz zu Farbstoffen in Wasser komplett unlöslich sind. Maßgeblich für die Eigenschaften der Pigmente sind beispielsweise Teilchengröße und Teilchengrößenverteilung. Letztere bestimmen die spezifische Oberfläche, die wiederum für die Streuung und Reflexion des Lichts verantwortlich sind und damit die Farbe ausmachen. Pigmente besitzen keinerlei Anziehungskraft zur Faser und haben daher, im Gegensatz zu den Farbstoffen, keine Möglichkeit, an die Faser anzubinden.

Die im Textildruck eingesetzten Farbstoffe unterscheiden sich in Abhängigkeit des zu bedruckenden Substrates. Für das klassische Bedrucken von Cellulosefasern werden bisher Reaktivfarbstoffe, Küpen-, Schwefel- oder Direktfarbstoffen eingesetzt. Säurefarbstoffe eignen sich üblicherweise für Wolle und Seide. Polyamid wird üblicherweise mit Säure- oder Metallkomplexfarbstoffen, aber auch mit Direktfarbstoffen oder Reaktivfarbstoffen eingefärbt. Polyester wird meist mit Dispersionsfarbstoffen bedruckt. Nach dem Drucken wird die Ware normalerweise getrocknet, gedämpft und der überschüssige Farbstoff sowie der Verdicker werden ausgewaschen.

Im digitalen Textildruck und vor allem im Bereich DTG (Direct to Garment) und DTF (Direct to Fabric) werden häufig Tinte auf Farbstoffbasis eingesetzt, zunehmend werden aber auch pigmentierte Tinten angeboten. Der Einsatz der pigmentierten Tinten erfolgt bisher überwiegend auf Baumwolle oder anderen Naturfasern. Dazu wird das Substrat üblicherweise mit einem meist kationischen Primer vorbehandelt und mit einer meist anionischen Tinte bedruckt.

EP2011918B1 beschreibt ein Druckverfahren und einen gedruckten Artikel.

EP2098634A1 beschreibt ein Pigmentdruckverfahren und damit verbundene Stoffe.

EP3172376B1 beschreibt ein Verfahren zum Drucken eines Tintenbildes auf einem gewebten Textilmaterial.

US2017233595A1 beschreibt Polymerdispersionen in wässrigen Medien zur Bildung von Bindemitteln für Vorbehandlungen, Beschichtungen und Bildern auf Substraten.

US2019382606A1 beschreibt Tintenstrahldruck auf gefärbten synthetischen Stoffen.

WO2021224922A2 beschreibt Vorbehandlungsformulierungen sowohl für Nass-in-Nass- als auch für Nass-in-Trocken-Digitaldruckverfahren.

WO2021130744A1 beschreibt Sol-Gel basierte multifunktionelle wässrige Tinten.

WO2021061147A1 beschreibt textile Druckverfahren.

US2017233595A1 beschreibt wässrige Polymerzusammensetzungen für Druckverfahren.

WO2010114899A1 beschreibt urethanbasierte Tinten für Druckverfahren.

WO2009137747A1 beschreibt Inkjet-Tinten.

EP3299426A1 beschreibt eine Tintenstrahl-Tintenzusammensetzung für den Textildruck.

EP3225663A1 beschreibt eine Färbezusammensetzung.

EP3357976A1 beschreibt eine Färbezusammensetzung.

WO2015145431A1 beschreibt einen Dispersionsfarbstoff, der eine aktive Färbeverbindung enthält.

US2017137648A1 beschreibt eine Tintenzusammensetzung.

JP2003048367A beschreibt eine flüssige Zusammensetzung.

US2017137648A1 beschreibt eine Tintenzusammensetzung.

US2004009294A1 beschreibt eine wässrige Dispersion enthaltend Pigment.

Die bisherigen Druck- und Färbeverfahren haben verschiedene Nachteile:
- Bei den gängigen Färbeprozessen ist der Ressourcenverbrauch (Wasser, Energie) relativ hoch, zudem entstehen große Mengen an Abwasser.
- Kleine Losgrößen sind nicht möglich oder unwirtschaftlich.
- Die eingesetzten Farbstoffe sind teilweise bedenklich. So werden zum Beispiel zum Färben von Polyamid Reaktivfarbstoffe wie Reactive Black 5 (mengenmäßig größter und weltweit am häufigsten verwendeter Reaktivfarbstoff) eingesetzt. Dieser Farbstoff ist als gesundheitsgefährdend gekennzeichnet (GHS 08, H 317-334).
- Zum Färben von Polyester kommen überwiegend Dispersionsfarbstoffe zum Einsatz. Diese stehen im Verdacht, allergische Hautreaktionen hervorzurufen.
- Die Farbstoffauswahl beziehungsweise die Färbeflotte richtet sich nach dem zu färbenden Substrat. Es ist derzeit nicht möglich, mit einer Farbstoffklasse unterschiedliche Arten von Textilien zu färben.
- Erzielte Echtheiten (Waschbeständigkeit, Trockenabrieb, Nassabrieb, Lichtechtheit) sind teilweise nur sehr mäßig.
- Einsatz eines Primers ist häufig notwendig.
- Trocknungseinheit, insbesondere Infrarot oder Heißluft erforderlich.

Auf unpolaren Substraten wie Kunststoffen und Kunstfasern haben die bisher bekannten Druckverfahren und insbesondere die Verfahren im Digitaldruck besondere Nachteile:
- Vorbehandlung, insbesondere Corona-oder Plasmavorbehandlung erforderlich
- Einsatz eines geeigneten Primers notwendig
- Emissionen durch eingesetzte organische Lösemittel auch Hochsieder
- Trocknungseinheit, insbesondere Infrarot oder Heißluft erforderlich.
- Einsatz UV-härtender Digitaldruckfarben
   ∘ (bedenkliche Inhaltsstoffe / Reaktionsprodukte
   ∘ nur eingeschränkt für indirekten Food-Kontakt verwendbar
   ∘ nicht laminierbar
   ∘ keine Flexibilität
   ∘ Geruch
   ∘ Aushärteeinheit, insbesondere UV erforderlich.

Die Aufgabe der vorliegenden Erfindung ist es, eine Technologie bereitzustellen, die die Nachteile des Standes der Technik nicht aufweist und insbesondere wasserbasierte Tintensysteme für das Bedrucken und Färben von unpolaren Substraten wie Textilien ermöglicht.

Die der Erfindung zu Grunde liegende Aufgabe wird durch den Gegenstand des Anspruchs 1 gelöst, nämlich durch eine Pigmentdispersion gelöst, enthaltend
a. 10 bis 70 Gew.% wenigstens eines Pigments,
b. 2 bis 20 Gew.% wenigstens eines polaren Additivs,
c. 0 bis 20 Gew.% wenigstens eines Dispergiermittels,
d. 0 bis 0,3 Gew.% wenigstens eines Thixotropierhilfsmittels, und
e. Wasser,
dadurch gekennzeichnet, dass sie weniger als 1 Gew.% organische Lösungsmittel enthält.

Das Pigment kann anorganisch oder organisch sein. Das Pigment kann in Wasser und/oder organischen Lösungsmitteln unlöslich sein.

Das Pigment kann vorzugsweise in einer Menge in einem Bereich von 10 bis 70 Gew.%, besonders bevorzugt 20 bis 40 Gew.%, enthalten sein. Ist das Pigment ein organisches Pigment, so ist es vorzugsweise in einem Bereich von 20 bis 40 Gew.% enthalten. Ist das Pigment ein anorganisches Pigment (wie beispielsweise Titandioxid), so ist es vorzugsweise in einem Bereich von 50 bis 70 Gew.% enthalten.

Das polare Additiv weist vorzugsweise polare funktionelle Gruppen wie beispielsweise Hydroxylgruppen, Amingruppen, Sulfonsäureestergrupppen, und/oder Carbonylgruppen auf. Das polare Additiv ist vorzugsweise ausgewählt aus der Gruppe Gerbstoffe (wie beispielsweise Polyhydroxyphenole wie Tannin), Polyurethan-basierte Harze, Acrylcopolymere/Acrylharze, Harnstoff, Zuckeralkohole (wie beispielsweise Sorbitol), Polyvinylalkohol, Polyvinylacetat, und/oder Mischungen derselben.

Der Gehalt an polarem Additiv liegt vorzugsweise in einem Bereich von 3 bis 11 Gew.%, ganz besonders bevorzugt in einem Bereich von 5 bis 9 Gew.%.

Vorzugsweise enthält die Pigmentdispersion 0.5 bis 5 Gew.% Tannin, besonders bevorzugt 0,5 bis 3 Gew.% Tannin. Durch eine Additivierung mit beispielsweise Sulfonsäureestern, organischen Sulfonaten, organischen Phosphaten, Carbonsäureestern, Polyammoniumverbindungen sowie Gerbstoffen können die Echtheiten gezielt beeinflusst werden. So konnte zum Beispiel durch Zugabe eines Naturstoffes, dem Polyhydroxyphenol Tannin (Tannic Acid Tanex 40/Tannin AW), die Abriebfestigkeit auf Polyamid 6.6 von 3,5 auf 4,5 verbessert werden. Die orthoständigen phenolischen Hydroxygruppen sorgen vermutlich für eine bessere Quervernetzung, was wiederum zu einer besseren Abriebfestigkeit führt.

Vorzugsweise enthält die Pigmentdispersion 0,5 bis 25 Gew.% Polyurethan-basierte Harze, besonders bevorzugt 1 bis 6 Gew.% Polyurethan-basierte Harze. Alternativ enthält die Pigmentdispersion 0,5-25 Gew.%, besonders bevorzugt 1 bis 6 Gew.% , Acrylat-basierte Harze . Die Acrylat-basierten Harze haben den Vorteil, dass sie manche Pigmente besonders gut stabilisieren können.

Vorzugsweise enthält die Pigmentdispersion 2 bis 15 Gew.%, ganz besonders bevorzugt 4 bis 12 Gew.% eines oder mehrerer Dispergiermittel. Vorzugsweise ist das Dispergiermittel ein Dispergiermittel für wässrige Dispersionen. Das Dispergiermittel kann polymerbasiert sein.

Der Partikeldurchmesser partikulärer Materialien in der Pigmentdispersion liegt im Median vorzugsweise in einem Bereich von 1 bis 500 nm, besonders bevorzugt in einem Bereich von 70 bis 300 mn. Dies hat den Vorteil, dass die Pigmentdispersion dann besonders gut für Druckköpfe geeignet ist, die Tinte verdrucken.

Vorzugsweise enthält die Pigmentdispersion Thixotropierhilfsmittel in einem Bereich von 0,05 bis 0,25 Gew.%. Thixotropierhilfsmittel kann beispielsweise pyrogene Kieselsäure sein.

Das Wasser ist vorzugsweise vollentsalzt. Dadurch ist die Pigmentdispersion besonders gut für Druckverfahren geeignet. Vorzugsweise enthält die Pigmentdispersion 10 bis 80 Gew.%, ganz besonders bevorzugt 40 bis 70 Gew.% Wasser.

In der Pigmentdispersion können auch weitere Bestandteile wie beispielsweise Konservierungsmittel (beispielsweise aus der Gruppe der Isothiazolinone) enthalten sein.

Die Pigmentdispersion enthält weniger als 1 Gew.% organische Lösungsmittel, ganz besonders bevorzugt keine organischen Lösungsmittel.

Die Pigmentdispersion enthält vorzugsweise weniger als 1 Gew.% und besonders bevorzugt kein Chlorophyllin.

aAußerdem wird die der Erfindung zu Grunde liegende Aufgabe durch ein Verfahren zur Herstellung der erfindungsgemäßen Pigmentdispersion gelöst, dadurch gekennzeichnet, dass das Pigment mit den übrigen Inhaltsstoffen vermahlen wird.

Durch ein gezieltes Vorbehandeln (wie beispielsweise Vermahlen, Dispergieren, Mörsern, Ultraschallbehandlung, ...) der Pigmente konnte die Anbindung an die Faser deutlich verbessert werden. Um diesen Vorgang gezielt steuern zu können, wurden bei der Pigmentvermahlung vorzugsweise nur Additive und/oder Anreibeharze eingesetzt, die über geeignete funktionelle Gruppen, wie z.B. R-NH2, CO, R-OH, R1-SO2-O-R2, R1-CO-O-R2, R-CO-NH2, verfügen und so als Bindeglied zwischen Pigment und Bindemittel fungieren können. Zudem hat sich der Einsatz natürlicher Gerbstoffe, insbesondere aus der Gruppe der Polyhydroxyphenole, als überaus haftungsverbessernd herausgestellt.

Die Pigmentdispersion ist vorzugsweise flüssig.

Die Pigmentdispersion enthält vorzugsweise weniger als 1 Gew.% und besonders bevorzugt keinen Vernetzer (Crosslinker) und insbesondere keinen Carbodiimid-Vernetzer.

Außerdem wird die der Erfindung zu Grunde liegende Aufgabe durch eine Tinte gelöst, die zum Bedrucken von unpolaren Substraten geeignet ist, enthaltend Bindemittel und die erfindungsgemäße Pigmentdispersion.

Mit dieser Tinte ist es erstmals möglich, ohne Vorbehandlung auf unpolare Substrate wie beispielsweise Polyestertextilien zu drucken. Diese Tinte kann natürlich auch zum Bedrucken und Färben von polaren Substraten eingesetzt werden.

Dadurch wird erstmals vorbehandlungsfreies, digitales Bedrucken oder Färben unpolarer Substrate und Funktionstextilien mit einer wasserbasierenden, pigmentierten Tinte ohne Einsatz organischer Lösemittel ermöglicht.

Die Anzahl und Vielfalt von Funktionstextilien wächst stetig, zudem kommen aus Nachhaltigkeitsgründen mehr und mehr recycelte Materialien (mit teilweise sehr unterschiedlicher Zusammensetzung) zum Einsatz. Dies hat zur Folge, dass die Anforderungen an die Farben steigen und die herzustellenden Losgrößen eher kleiner werden. Um diesem Trend Rechnung zu tragen, ist mit der erfindungsgemäßen Tinte das digitale Bedrucken und Färben unpolarer Textilien mit einer wasserbasierten Tinte möglich.

Mit der erfindungsgemäßen Tinte ist es möglich, die Pigmente an der Faser zu fixieren und so auch schwierige Materialien wie Polyamid (PA), Polyester (z.b. PET), auch recyceltes PET (rPET) sowie Polyethylenfuranoat (PEF) zu färben, aber auch digital zu bedrucken. Durch eine geschickte Rohstoffkombination konnten die Erfinder einen Anbindemechanismus finden, der im Vergleich zu den standardmäßig eingesetzten Farbstoffen zu besseren Wasch- und Reibechtheiten führt. Die Herausforderung besteht darin, in einem digitalen Verfahren die Tinte oder Färbelösung so aufzubringen, dass alle erforderlichen Eigenschaften wie beispielsweise Haftung, Waschbeständigkeit, Abriebfestigkeit und Lichtechtheit gegeben sind. Es ist bekannt, dass Pigmente im Vergleich zu den Farbstoffgruppen nicht an die Faser anbinden, sondern eher auf der Faser liegen. Dies führt normalerweise zu einer schlechteren Wasch- und Reibechtheit. Dieses Problem konnte mit der erfindungsgemäßen Tinte gelöst werden.

Um eine Bindung beispielsweise zur unpolaren Faser zu erreichen, wurden die Pigmente beispielsweise mit den übrigen Inhaltsstoffen der erfindungsgemäßen Pigmentdispersion gemischt und insbesondere vermahlen. So ist es möglich, das Pigment beispielsweise mit dem polaren Additiv als permanenten Dipol auszurüsten. Dieser induziert nun ebenfalls einen Dipol in dem unpolaren Kunststoffmolekül, worauf sich die beiden Moleküle nun anziehen. Die erhaltene Dispersionswechselwirkung zwischen den induzierten Dipolen hängt von der Polarisierbarkeit des Moleküls ab. Als besonders wirksam haben sich Carbonylgruppen aber auch Hydroxy-Gruppen erwiesen. Man kann sich diese Wechselwirkungen wie folgt vorstellen:

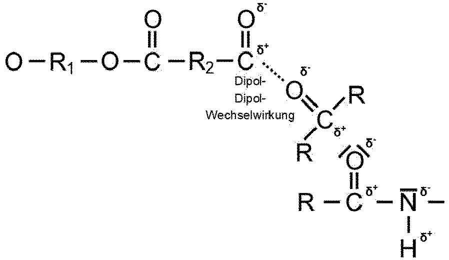

Mit Hilfe der erfindungsgemäßen Pigmentdispersion ist es den Erfindern überraschenderweise gelungen, die Pigmente an die unpolaren Substrate wie beispielsweise Fasern "anzubinden". Der Anbindemechanismus über die Londonsche Dispersionswechselwirkung unterscheidet sich grundsätzlich von den bisher vorrangig ionischen Färbelösungen/Farbstofftinten. Ein signifikanter Vorteil ist, dass die erfindungsgemäßen Tinten nicht faserspezifisch reagieren, sondern praktisch für alle Arten von Textilien geeignet sind.

Überraschender Weise konnten die Erfinder die Wirkung des Effektes auch auf anderen unpolaren Substraten wie beispielsweise Kunststofffolien (beispielsweise Polyesterfolien und einigen modifizierten PE / PP /BOPP-Folien) beobachten.

Um eine Anbindung an die unpolaren Substrate wie Textilfasern zu erreichen, werden die Pigmente vorzugsweise mit geeigneten funktionellen Gruppen ausgerüstet. Dies geschieht beispielsweise bereits bei der Vermahlung beziehungsweise Dispergierung und sorgt so für "Andockmöglichkeiten" an das Substrat.

Der Partikeldurchmesser partikulärer Materialien in der Tinte liegt im Median vorzugsweise in einem Bereich von 1 bis 500 nm, besonders bevorzugt in einem Bereich von 70 bis 300nm. Dies hat den Vorteil, dass die Tinte dann besonders gut für digitale Druckaufgaben geeignet ist.

Die Pigmentdispersion ist in der Tinte vorzugsweise in einer Menge in einem Bereich von 10 bis 40 Gew.%, ganz besonders bevorzugt in einem Bereich von 15 bis 30 Gew.% enthalten.

Das Bindemittel ist in der Tinte vorzugsweise in einer Menge in einem Bereich von 0,5 bis 20 Gew.%, ganz besonders bevorzugt in einem Bereich von 1 bis 15 Gew.% enthalten. Das Bindemittel ist vorzugsweise polymerbasiert. Das Bindemittel ist besonders bevorzugt basiert auf einem Polyurethan oder Polyacrylat. Das Polyurethan oder Polyacrylat kann auch modifiziert sein. Vorzugsweise ist das Bindemittel ein polares Additiv, wie es oben definiert ist. Das Bindemittel weist also beispielsweise bevorzugt polare funktionelle Gruppen wie beispielsweise Hydroxylgruppen, Amingruppen, Sulfonsäureestergrupppen, und/oder Carbonylgruppen auf. Das Bindemittel hat vor allem die Aufgabe, an das Pigment zu binden und so dem Pigment beispielsweise polare Eigenschaften zu verleihen.

Das Gewichtsverhältnis von Bindemittel zu Pigment liegt in der Tinte vorzugsweise in einem Bereich von 1:1 bis 2:1. Es hat sich herausgestellt, dass ein solches Gewichtsverhältnis dazu beiträgt, dass sich eine solche Tinte besonders gut in Druckköpfen verdrucken lässt. Außerdem ist eine wichtige Voraussetzung zur Erzielung guter Abriebwerte und Waschbeständigkeiten bei Funktionstextilien ein optimales Pigment/Bindemittel-Verhältnis. Nur so kann sich ein homogener, flexibler Auftrag (wie beispielsweise ein Film) ausbilden. Ein inhomogener Auftrag würde zu Rissen oder porösen Stellen führen, die wiederum mögliche Angriffsflächen bei späterer Behandlung (z.B. waschen) ausbilden können. Die Folge ist ein verstärkter Farbabrieb durch den Waschprozess, was wiederum zu einem schnellen Farbverlust führt.

Die Tinte enthält vorzugsweise weniger als 2 Gew.% organische Lösungsmittel, ganz besonders bevorzugt keine organischen Lösungsmittel. Die Tinte enthält vorzugsweise weniger als 1 Gew.% organische Flüssigkeiten mit einem Siedepunkt von mehr als 200 °C, ganz besonders bevorzugt keine organischen Flüssigkeiten mit einem Siedepunkt von mehr als 200 °C.

Die Tinte enthält vorzugsweise 1 bis 30 Gew.% polare Additive, ganz besonders bevorzugt 3 bis 20 Gew.% polare Additive. Die Tinte kann vorzugsweise über die polaren Additive aus der Polymerdispersion hinaus weitere polare Additive enthalten. Diese zusätzlichen polaren Additive fallen unter die oben genannte Definition. Das zusätzliche polare Additiv weist daher vorzugsweise polare funktionelle Gruppen wie beispielsweise Hydroxylgruppen, Sulfonsäureestergrupppen, und/oder Carbonylgruppen auf. Das zusätzliche polare Additiv ist daher ebenfalls vorzugsweise ausgewählt aus der Gruppe Gerbstoffe (wie beispielsweise Polyhydroxyphenole wie Tannin), Polyurethan-basierte Harze, Harnstoff, Zuckeralkohole (wie beispielsweise Sorbitol), Polyvinylalkohol, Polyvinylacetat, und/oder Mischungen derselben.

In Kombination mit Bindemittel aus der Tinte kann es zu einer Kopplungsreaktion kommen. Die funktionellen Gruppen, welche beispielsweise in der Polymerdispersion vorhanden sind, koppeln mit den funktionellen Gruppen der Substanzen in der Tinte. Dies führt zu einer Verknüpfung und somit später zu einer deutlich besseren Fixierung auf dem Substrat. Konventionell pigmentierte Tintenformulierungen benötigen zur Fixierung in der Regel einen Primer.

So kann die Tinte vorzugsweise 1 bis 5 Gew.% Harnstoff enthalten.

So kann die Tinte vorzugsweise 0,1 bis 3 Gew.% Gerbstoffe (wie beispielsweise Polyhydroxyphenole wie Tannin) enthalten. Die Gerbstoffe können auch noch zusätzlich zu den Gerbstoffen aus der Pigmentdispersion zugegeben sein.

Die Tinte enthält vorzugsweise ein Netzmittel. Das Netzmittel kann in der Tinte vorzugsweise in einer Menge in einem Bereich von 0,1 bis 1,2 Gew.%, besonders bevorzugt in einem Bereich von 0,2 bis 0,6 Gew.% enthalten sein.

In der Tinte ist vorzugsweise ein oder mehrere Dispergiermittel in einer Menge in einem Bereich von 0,5 bis 5 Gew.%, ganz besonders bevorzugt in einem Bereich von 1 bis 3 Gew.% enthalten.

In der Tinte ist vorzugsweise ein oder mehrere Verdicker in einer Menge in einem Bereich von 1 bis 10 Gew.%, ganz besonders bevorzugt in einem Bereich von 2 bis 8 Gew.% enthalten. Wenigstens einer der Verdicker kann beispielsweise ausgewählt sein aus der Gruppe Polyethylenglykol mit einem Molekulargewischt von wenigstens 6000 g/mol (Feststoff), Sorbitol, Polyvinylalkohol, Polyvinylacetat und/oder Mischungen derselben.

Die kinematische Viskosität der Tinte liegt vorzugsweise in einem Bereich von 2 bis 20 mPas·s bei 20 °C und 1 bar. Die Viskosität kann kinematisch mittels eines Glas-Kapillarviskosimeter (Cannon Fenske nach ISO/DIS 3105, ASTM D2515/D 446 und NF T 60-100).

Die dynamische Oberflächenspannung der Tinte liegt vorzugsweise in einem Bereich von 30 bis 45 mN/m (beispielsweise gemessen mit Sita Online F10).

Die Tinte ist vorzugsweise eine Digitaldrucktinte.

Die Tinte enthält vorzugsweise keine anionischen Bindemittel.

Die Tinte ist vorzugsweise flüssig.

Der pH-Wert der Tinte liegt vorzugsweise in einem Bereich von 5-9.

Die Tinte basiert vorzugsweise nicht auf einem Sol-Gel System. Insbesondere liegt der Gehalt an anorganischen Materialien in der Tinte beispielsweise bei weniger als 5 Gew.% (Ausnahme kann eine Tinte enthaltend Titanoxid als Weißpigment sein).

Die Tinte enthält vorzugsweise 0 bis 20 Gew.% einer oder mehrerer Acrylharzdispersionen.

Die Tinte enthält vorzugsweise 0 bis 20 Gew.% einer oder mehrerer Acryl-Latex-Emulsionen.

Die Tinte enthält vorzugsweise weniger als 1 Gew.% und besonders bevorzugt keine Isocyanate, Diisocyanate und/oder Polyisocyanate.

Die Tinte enthält vorzugsweise weniger als 1 Gew.% und besonders bevorzugt kein Chlorophyllin.

Die Tinte enthält vorzugsweise weniger als 1 Gew.% und besonders bevorzugt keinen Vernetzer (Crosslinker) und insbesondere keinen Carbodiimid-Vernetzer.

Außerdem wird die der Erfindung zu Grunde liegende Aufgabe durch ein Verfahren zum Bedrucken und Färben von unpolaren Substraten gelöst, dadurch gekennzeichnet, dass eine erfindungsgemäße Tinte mit einem Digitaldruckkopf auf ein unpolares Substrat gedruckt wird.

Das Substrat kann beispielsweise eine Folie oder ein Textil sein. Die Folie kann beispielsweise eine Kunststofffolie sein. Das Material des Substrats kann beispielsweise ausgewählt sein aus Polyamid, Polyester (wie beispielsweise Polyethylenterephthalat, PET), recyeltes PET, Polyethylenfuranoat, Polyethylen, Polypropylen (beispielsweise auch biaxial orientiertes Polypropylen). Das Textil kann beispielsweise Fasern aus Polyamid, Polyester (wie beispielsweise Polyethylenterephthalat, PET), recyeltes PET und/oder Polyethylenfuranoat enthalten.

Das Substrat wird bei dem erfindungsgemäßen Verfahren vorzugsweise nicht mit einem Primer vorbehandelt. Es findet insbesondere bevorzugt keine Vorbehandlung durch einen kationischen Primer / Vorbehandler statt.

Das Substrat ist vorzugsweise vor der Anwendung des Verfahrens noch nicht mit Farbstoffen oder Pigmenten gefärbt.

Das Druckverfahren ist vorzugsweise kein Flexodruck, Tampondruck, Tiefdruck, Transferdruck, Flocktransferdruck, Sublimationsdruck, Latexdruck, Stempeldruck, Siebdruck oder Ätzdruck.

Die Oberflächenbeschaffenheit der Faser hat einen erheblichen Einfluss auf das Haftungsvermögen der Pigmente. Auf natürlichen Fasern mit einer raueren Oberfläche haften Pigmente besser als auf einer glatten Kunstfaser. So stellt eine optimale Anbindung der Farbpigmente an die eher unpolaren Fasern der Funktionstextilien eine große Herausforderung dar. Bei der Oberflächenspannung unterscheiden wir zwischen polarem und dispersem Anteil. Während bei Baumwolle und Naturfasern der polare Anteil vergleichsweise hoch ist, beträgt er bei den Funktionstextilien (PA 6.6 / Polyester) nur 5 - 15 %, was zu Problemen bei der Benetzung führt. Das unpolare Substrat im Sinne der Erfindung weist vorzugsweise einen polaren Anteil in einem Bereich von 1 bis 20% auf.

Eine bekannte und etablierte Möglichkeit zur Verbesserung der Benetzungs- und Haftungseigenschaften ist die Vorbehandlung des Substrates mittels Plasmas oder Corona. Dadurch kommt es zu einer Erhöhung des polaren Anteiles, was wiederum zu einer besseren Anbindung der Farbpigmente an die Faser führt. Dieser Effekt lässt jedoch innerhalb kürzester Zeit (ca. 24 h) bereits merklich nach. Zudem sind die Anschaffungs-, Energie- und Unterhaltskosten einer solchen Vorbehandlungsanlage nicht unerheblich.

Um die erforderliche Haftung mit einer nachhaltigen, vorbehandlungsfreien Tinte (beispielsweise Färbeflotte bzw. Digitaldrucktinte) erfüllen zu können, muss gewährleistet sein, dass die Pigmentteilchen optimal an die Faser anbinden, ohne die Eigenschaften des Funktionstextils zu beeinflussen. Dies geschieht durch einen gesteuerten "Kopplungsprozess", indem sich unterschiedliche funktionelle Gruppen aus der Pigmentdispersion und der Tinte miteinander verknüpfen.

In einer weiteren Ausführungsform wird die Aufgabe der Erfindung durch die Verwendung der Pigmentdispersion zum Bedrucken von unpolaren Substraten gelöst.

Außerdem wird die Aufgabe der Erfindung durch ein Textil gelöst, das mit der erfindungsgemäßen Tinte gefärbt oder bedruckt ist.

Die Lichtechtheit des Textils kann nach DIN EN ISO 105-B02 gemessen werden und vorzugsweise in einem Bereich von 5 bis 8 liegen.

Die Ergebnisse des Waschtests des Textils nach DIN EN ISO 105-C06 können vorzugsweise in einem Bereich von 3,5 bis 5 liegen.Der Nassabrieb des Textils kann nach DIN EN ISO 12947-1 (Martindale) gemessen werden und liegt vorzugsweise in einem Bereich von 3 bis 5.

Der Trockenabrieb des Textils kann nach DIN EN ISO 12947-1 (Martindale) gemessen werden und liegt vorzugsweise in einem Bereich von 3 bis 5.

### Ausführungsbeispiele

Zunächst wird eine Pigmentdispersion durch vermahlen von Pigment mit den übrigen hier aufgeführten Zutaten hergestellt:

| | |
|---|---|
| Vollentsalztes Wasser | 53,8g |
| Silco Sperse HLD 11 | 5g |
| Tanex 40 | 1 g |
| Clariant Inkjet Magenta E02 | 30 g |
| Joncryl HPD 671 neutralisiert | 10 g |
| Parmetol MBX | 0,1 g |
| Aerosil R 7200 | 0,1 g |

ParmetolMBX ist ein Biozid der Firma Vink Chemicals.

Silco Sperse HLD 11 ist ein Dispergiermittel der Firma Silcona/ CHTDas Dispergiermittel weist freie Hydroxylgruppen auf.

Tanex 40 ist ein Tannin der Firma Ajinomoto OmniChem.

Clariant Inkjet Magenta E02 ist ein organisches Pigment der Firma Clariant.

Joncryl HPD 671 ist ein Festharz der Firma BASF, welches neutralisiert wurde, wie es in der Richtrezeptur der BASF beschrieben ist.

Aerosil R 7200 ist pyrogene Kieselsäure der Firma Evonik.

Zur Herstellung der erfindungsgemäßen Pigmentdispersion wurden 30 g der vorgenannten Inhaltsstoffe 2 x 15 Minuten bei einer Drehzahl von 600 l/min mit einer Fritsch Pulverisette 6 in einem Zirkonoxid-Mahlbecher mit einem Volumen von 80 ml mit 90 g Zirkonoxid-Mahlkugeln (Durchmesser 0,4 bis 0,6 mm) vermahlen.

Eine Tinte, die zum Bedrucken von unpolaren Substraten geeignet ist, wurde erhalten, indem die folgenden Bestandteile zu einer Tinte verrührt wurde:

| | |
|---|---|
| Erfindungsgemäße Polymerdispersion wie vorstehend beschrieben | 20 g |
| Wathane N50 | 10 g |
| BYK 3450 | 0,5g |
| PEG 8000 | 5,5 g |
| Harnstoff (Carbonylgruppen) | 2 g |
| Tanex 40 (Hydroxygruppen) | 1,0 |
| Parmetol MBX | 0,1 g |
| Wasser | 60,9 g |

BYK 3450 ist ein Silikontensid (Netzmittel) der Firma BYK.

PEG 8000 ist ein Polyethylenglykol mit einem Molekulargewicht von 8.000 g/mol als Verdicker.

Wathane N50 ist eine nichtionische Polyurethandispersion der Firma Polycoatings.

Parmetol MBX ist ein Biozide der Firma Vink Chemicals.

Die erfindungsgemäße Tinte wurde hergestellt, indem die vorgenannten Zutaten mit einem 4-Blatt-Laborrührer der Firma Heidolph RZR2101 control mit einer

Umdrehungsgeschwindigkeit von 400 l/min 15 Minuten lang verrührt wurde.

Anschließend wurde die Tinte auf ein handelsübliches Polyestertextil für Bekleidung und auf ein Polyamid 6.6 Textil für Bekleidung mit dem Drucker Fuji Dimatix Samba mit dem dort verbauten Druckkopf gedruckt.

Es wurde ein Waschtest nach DIN EN ISO 105-C06, ein Abriebtest nach DIN EN ISO 12947-1 (Martindale) und ein Test für Lichtechtheit nach DIN EN ISO 105-B02 durchgeführt. Die Tests wurden zum Vergleich auch mit anderen Farbstoffen durchgeführt.

| Polyestertextil | Waschtest | Trockenabrieb | Nassabrieb | Lichtechtheit |
|---|---|---|---|---|
| Tinte aus dem Beispiel | 4-5 | 4-5 | 4-5 | 6-7 |
| Säurefarbstoff Lanaset RS | 1-2 | 1-2 | 1-2 | 2-5 |
| Dispersionsfarbstoff Terasil XKS | 3,5-5 | 3,5-4,5 | 3,5-4,5 | 5-7 |
| Direktfarbstoff Remazol | 1-1,5 | 1-2 | 1-2 | 3-5 |
| Reaktivfarbstoff Novacron LV | 2,5-3 | 2,5-3,5 | 2-3 | 4-5 |

| Polyamid 6.6 Textil | Waschtest | Trockenabrieb | Nassabrieb | Lichtechtheit |
|---|---|---|---|---|
| Tinte aus dem Beispiel | 4-5 | 4-5 | 4-5 | 6-7 |
| Säurefarbstoff Lanaset RS | 2,5-3,5 | 2,5-3,5 | 2,5-3,5 | 2-5 |
| Dispersionsfarbstoff Terasil XKS | 3,5-4,5 | 3-4 | 3-4 | 5-7 |
| Direktfarbstoff Remazol | 1-2 | 1-2 | 1-2 | 3-5 |
| Reaktivfarbstoff Novacron LV | 3-4,5 | 3-4 | 3-3,5 | 4-5 |

Die erfindungsgemäße Tinte zeigte im Vergleich zu den bisher üblichen Farbstoffen deutlich verbesserte Eigenschaften.

## Patentansprüche

1. Pigmentdispersion enthaltend
a. 10 bis 70 Gew.% wenigstens eines Pigments,
b. 2 bis 20 Gew.% wenigstens eines polaren Additivs,
c. 0 bis 20 Gew.% wenigstens eines Dispergiermittels,
d. 0 bis 0,3 Gew.% wenigstens eines Thixotropierhilfsmittels, und
e. Wasser,
**dadurch gekennzeichnet, dass** sie weniger als 1 Gew.% organische Lösungsmittel enthält.

2. Pigmentdispersion gemäß Anspruch 1, **dadurch gekennzeichnet, dass** das polare Additiv aus der Gruppe Gerbstoffe, Polyurethan-basierte Harze, Harnstoff, Zuckeralkohole, Polyvinylalkohol, Polyvinylacetat, und/oder Mischungen derselben ausgewählt ist.

3. Pigmentdispersion gemäß einem der vorhergehenden Ansprüche, **dadurch gekennzeichnet, dass** der Partikeldurchmesser partikulärer Materialien in der Pigmentdispersion im Median in einem Bereich von 1 bis 500 nm liegt.

4. Pigmentdispersion gemäß einem der vorhergehenden Ansprüche, **dadurch gekennzeichnet, dass** die Pigmentdispersion flüssig ist und 20 bis 80 Gew.% Wasser enthält.

5. Verfahren zur Herstellung der Pigmentdispersion gemäß einem der Ansprüche 1 bis 4, **dadurch gekennzeichnet, dass** das Pigment mit den übrigen Inhaltsstoffen vermahlen wird.

6. Tinte, die zum Bedrucken und Färben von unpolaren Substraten geeignet ist, enthaltend Bindemittel und die Pigmentdispersion gemäß einem der Ansprüche 1 bis 4.

7. Tinte gemäß Anspruch 6, **dadurch gekennzeichnet, dass** das Gewichtsverhältnis von Bindemittel zu Pigment in einem Bereich von 1:1 bis 2:1 liegt.

8. Tinte gemäß einem der Ansprüche 6 oder 7, **dadurch gekennzeichnet, dass** sie 1 bis 5 Gew.% Harnstoff enthält.

9. Tinte gemäß einem der Ansprüche 6 bis 8, **dadurch gekennzeichnet, dass** das Bindemittel in der Tinte in einer Menge in einem Bereich von 0,5 bis 20 Gew.% enthalten ist.

10. Tinte gemäß einem der Ansprüche 6 bis 9, **dadurch gekennzeichnet, dass** die Tinte weniger als 2 Gew.% organische Lösungsmittel enthält.

11. Tinte gemäß einem der Ansprüche 6 bis 10, **dadurch gekennzeichnet, dass** die Tinte 0,1 bis 3 Gew.% Gerbstoffe enthält.

12. Tinte gemäß einem der Ansprüche 6 bis 11, **dadurch gekennzeichnet, dass** die Tinte keine anionischen Bindemittel enthält

13. Verfahren zum Bedrucken von unpolaren Substraten, **dadurch gekennzeichnet, dass** eine Tinte gemäß einem der Ansprüche 6 bis 12 mit einem Druckkopf auf ein unpolares Substrat gedruckt wird.

14. Verwendung der Pigmentdispersion gemäß einem der Ansprüche 1 bis 4 zum Bedrucken und Färben von unpolaren Substraten.

15. Textil, gefärbt oder bedruckt mit einer Tinte gemäß einem der Ansprüche 6 bis 12.

## Claims

1. A pigment dispersion comprising
a. from 10 to 70% by weight of at least one pigment,
b. from 2 to 20% by weight of at least one polar additive,
c. from 0 to 20% by weight of at least one dispersant,
d. from 0 to 0.3% by weight of at least one thixotropy auxiliary, and
e. water,
**characterised in that** it comprises less than 1% by weight of organic solvents.

2. The pigment dispersion according to claim 1, **characterised in that** the polar additive is selected from the group of tanning agents, polyurethane-based resins, urea, sugar alcohols, polyvinyl alcohol, polyvinyl acetate, and/or mixtures thereof.

3. The pigment dispersion according to any one of the preceding claims, **characterised in that** the median particle diameter of particulate materials in the pigment dispersion is in a range from 1 to 500 nm.

4. The pigment dispersion according to any one of the preceding claims, **characterised in that** the pigment dispersion is liquid and comprises from 20 to 80% by weight of water.

5. A process for manufacturing the pigment dispersion according to any one of claims 1 to 4, **characterised in that** the pigment is ground with the other ingredients.

6. An ink suitable for printing and dyeing of nonpolar substrates comprising a binder and the pigment dispersion according to any one of claims 1 to 4.

7. The ink according to claim 6, **characterised in that** the weight ratio of binder to pigment is in a range from 1:1 to 2:1.

8. The ink according to any one of claims 6 or 7, **characterised in that** it comprises from 1 to 5% by weight of urea.

9. The ink according to any one of claims 6 to 8, **characterised in that** the ink comprises an amount of from 0.5 to 20% by weight of the binder.

10. The ink according to any one of claims 6 to 9, **characterised in that** the ink comprises less than 2% by weight of organic solvents.

11. The ink according to any one of claims 6 to 10, **characterised in that** the ink comprises from 0.1 to 3% by weight of tanning agents.

12. The ink according to any one of claims 6 to 11, **characterised in that** the ink does not comprise anionic binders.

13. A process for printing on nonpolar substrates, **characterised in that** an ink according to any one of claims 6 to 12 is printed on a nonpolar substrate by a print head.

14. Use of the pigment dispersion according to any one of claims 1 to 4 for printing and dyeing of nonpolar substrates.

15. A textile dyed or printed with an ink according to any one of claims 6 to 12.

## Revendications

1. Dispersion de pigment contenant
a. 10 à 70 % en poids d'au moins un pigment,
b. 2 à 20 % en poids d'au moins un additif polaire,
c. 0 à 20 % en poids d'au moins un dispersant,
d. 0 à 0,3 % en poids d'au moins un adjuvant thixotropique, et
e. eau,
**caractérisée en ce qu'**elle contient moins de 1 % en poids de solvants organiques.

2. Dispersion de pigment selon la revendication 1, **caractérisée en ce que** l'additif polaire est choisi dans le groupe des tanins, des résines à base de polyuréthane, de l'urée, des alcools de sucre, de l'alcool polyvinylique, de l'acétate de polyvinyle et/ou de mélanges de ceux-ci.

3. Dispersion de pigment selon l'une quelconque des revendications précédentes, **caractérisée en ce que** le diamètre médian de particules des matériaux particulaires dans la dispersion de pigment se situe dans une plage de 1 à 500 nm.

4. Dispersion de pigment selon l'une quelconque des revendications précédentes, **caractérisée en ce que** la dispersion de pigment est liquide et contient de 20 à 80 % en poids d'eau.

5. Procédé de préparation de la dispersion de pigment selon l'une quelconque des revendications 1 à 4, **caractérisé en ce que** le pigment est broyé avec les autres ingrédients.

6. Encre adaptée à l'impression et à la coloration de substrats apolaires, contenant un liant et la dispersion de pigment selon l'une quelconque des revendications 1 à 4.

7. Encre selon la revendication 6, **caractérisée en ce que** le rapport pondéral liant/pigment est compris dans une plage de 1:1 à 2:1.

8. Encre selon l'une quelconque des revendications 6 ou 7, **caractérisée en ce qu'**elle contient 1 à 5 % en poids d'urée.

9. Encre selon l'une quelconque des revendications 6 à 8, **caractérisée en ce que** le liant est contenu dans l'encre en une quantité de 0,5 à 20 % en poids.

10. Encre selon l'une quelconque des revendications 6-9, **caractérisée en ce que** l'encre contient moins de 2 % en poids de solvants organiques.

11. Encre selon l'une quelconque des revendications 6-10, **caractérisée en ce que** l'encre contient 0,1 à 3 % en poids de tanins.

12. Encre selon l'une quelconque des revendications 6-11, **caractérisée en ce que** l'encre ne contient aucun liant anionique.

13. Procédé d'impression de substrats apolaires, **caractérisé en ce qu'**une encre selon l'une quelconque des revendications 6 à 12 est imprimée sur un substrat apolaire à l'aide d'une tête d'impression.

14. Utilisation de la dispersion de pigment selon l'une quelconque des revendications 1 à 4 pour l'impression et la teinture de substrats apolaires.

15. Textile coloré ou imprimé avec une encre selon l'une quelconque des revendications 6 à 12.
